# EUROPÄISCHE PATENTSCHRIFT

(11) **EP 0 355 285 B1**
(45) Veröffentlichungstag und Bekanntmachung des Hinweises auf die Patenterteilung: **06.10.1993**
(21) Anmeldenummer: 89110238.6
(22) Anmeldetag: 06.06.1989
(51) Int. Cl.: B01D 29/46, B01D 33/00

(54) **Vorrichtung zum Trennen einer Suspension**
Suspension separator
Dispositif pour séparer une suspension

(30) Priorität: 13.08.1988 DE 3827558
(43) Veröffentlichungstag der Anmeldung: 28.02.1990
(73) Patentinhaber: FRYMA-Maschinen AG, CH-4310 Rheinfelden (CH)
(72) Erfinder: Bühler, Gerhard, Dipl.-Ing., CH-7888 Rheinfelden (CH)
(74) Vertreter: Tetzner, Volkmar, Dr.-Ing. Dr. jur.

(56) Entgegenhaltungen:
- CH-A- 366 031
- FR-A- 1 305 412
- US-A- 1 664 769
- US-A- 3 152 078

## Beschreibung

Die Erfindung betrifft eine Vorrichtung zum Trennen einer Aufgabesuspension in eine Grobfraktion und eine Feinfraktion, enthaltend
a) einen Stapel von Trennscheiben mit zwischen den Trennscheiben befindlichen freien Zwischenräumen,
b) ein den Trennscheibenstapel aufnehmendes Gehäuse mit einem zwischen dem Umfang des Trennscheibenstapels und der Gehäusewand befindlichen ringförmigen Strömungsraum,
c) eine Antriebseinrichtung, durch die der Trennscheibenstapel um die Stapelachse drehbar ist,
d) einen Strömungskanal zur Zuführung der Aufgabesuspension zum Trennscheibenstapel, der an das eine axiale Ende des ringförmigen Strömungsraumes angeschlossen ist,
e) einen an den inneren Umfang der zwischen den Trennscheiben vorgesehenen Zwischenräume angeschlossenen Strömungskanal zur Abführung der Feinfraktion
f) und einen an das andere axiale Ende des ringförmigen Strömungsraumes angeschlossenen Strömungskanal zur Abführung der Grobfraktion.

Eine Vorrichtung der vorstehend genannten Gattung ist durch die US-A-3 152 078 bekannt.

Der Erfindung liegt die Aufgabe zugrunde, eine Vorrichtung der eingangs genannten Gattung so auszubilden, daß die Trennschärfe verbessert wird.

Diese Aufgabe wird erfindungsgemäß dadurch gelöst, daß
g) mit dem Trennscheibenstapel ein Mantelteil drehfest verbunden ist, der einen radialen Abstand vom Umfang des Trennscheibenstapels aufweist,
h) wobei der zwischen dem Mantelteil und dem Umfang des Trennscheibenstapels vorhandene Strömungsraum an dem dem Strömungskanal zur Zuführung der Suspension zugewandten axialen Ende offen und am anderen axialen Ende geschlossen ist.

Zweckmäßige Ausgestaltungen der Erfindung sind Gegenstand der Unteransprüche.

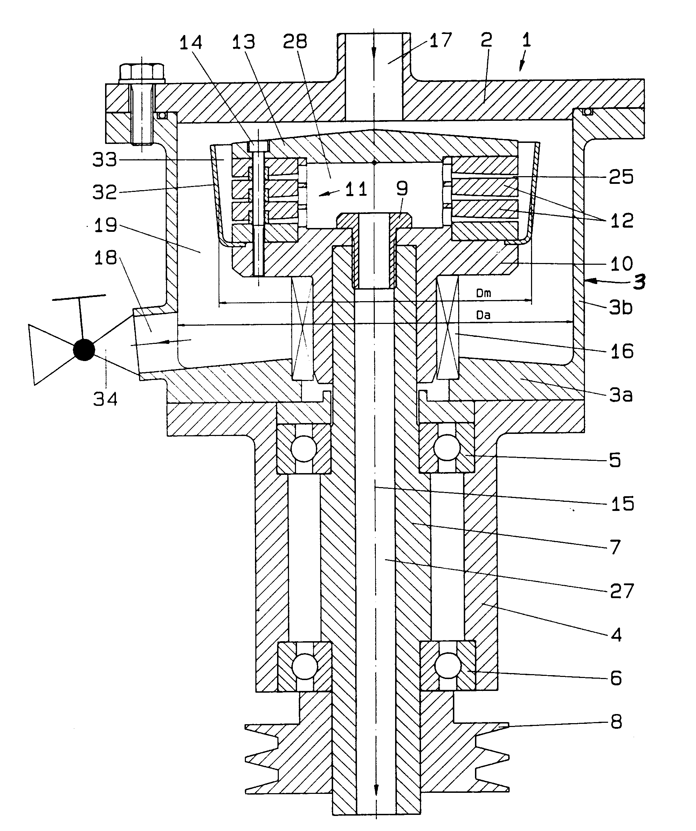

Ein Ausführungsbeispiel der Vorrichtung ist in der Zeichnung in einer Schnittdarstellung veranschaulicht.

Die in der Zeichnung veranschaulichte Vorrichtung zum Trennen einer Aufgabesuspension in eine Grobfraktion und eine Feinfraktion enthält ein Gehäuse 1, das im wesentlichen aus einem durch einen Deckel 2 verschlossenen oberen Gehäusekörper 3 und einem unteren Gehäusekörper 4 besteht.

Im Gehäuse 1 ist mittels Lagern 5, 6 eine Welle 7 drehbar gelagert, die durch ein drehzahlveränderliches Antriebsaggregat über eine Nabe 8 angetrieben wird.

Die Welle 7 trägt am oberen Ende einen mittels einer Schraube 9 befestigten Flansch 10, auf dem ein Stapel 11 von übereinander angeordneten Trennscheiben 12 angeordnet ist. Der Trennscheibenstapel 11 ist mit dem Flansch 10 sowie einer auf der Oberseite des Stapels aufliegenden Abdeckplatte 13 über Bolzen 14 verbunden.

Der Trennscheibenstapel 11 ist somit durch das (nicht veranschaulichte) Atriebsaggregat um die - bei dem dargestellten Ausführungsbeispiel vertikal angenommene - Stapelachse 15 drehbar. Der Ringspalt zwischen dem mit der Welle 7 rotierenden Flansch 10 und dem Boden 3a des oberen Gehäusekörpers 3 ist durch - ganz schematisch veranschaulichte - Dichtungen 16 abgedichtet.

Der Deckel 2 des oberen Gehäusekörpers 3 ist mit einem zentralen Strömungskanal 17 zur Zuführung der Aufgabesuspension versehen.

Der obere Gehäusekörper 3 enthält ferner dicht über dem Boden 3a einen Strömungskanal 18 zur Abführung der Grobfraktion.

Die zylindrische Gehäusewand 3b des oberen Gehäusekörpers 3 umschließt einen ringförmigen Strömungsraum 19, an dessen oberes axiales Ende der Strömungskanal 17 für die Aufgabesuspension angeschlossen ist. Der Strömungskanal 18 für die Abführung der Grobfraktion ist an das untere axiale Ende des ringförmigen Strömungsraumes 19 angeschlossen.

Mit dem Trennscheibenstapel 11 ist ein Mantelteil 32 drehfest verbunden, der einen radialen Abstand vom Umfang des Trennscheibenstapels aufweist. Der Mantelteil 32 besitzt die Form eines Konus, der sich zu dem dem Strömungskanal 18 für die Abführung der Grobfraktion zugewandten unteren Ende des Trennscheibenstapels 11 hin verjüngt.

Der zwischen dem Mantelteil 32 und dem Umfang des Trennscheibenstapels 11 vorhandene Strömungsraum 33 ist an dem dem Strömungskanal 17 für die Zuführung der Aufgabesuspension zugewandten oberen Ende offen und am anderen, unteren Ende geschlossen.

Der mittlere Durchmesser Dₘ des Mantelteiles 32 beträgt zweckmäßig das 0,6- bis 0,9fache, vorzugsweise das 0,65- bis 0,85fache des Außendurchmessers Dₐ des ringförmigen Strömungsraumes 19.

Die Funktion der Vorrichtung ist folgendermassen:
Die in eine Grobfraktion und eine Feinfraktion zu zerlegende Aufgabesuspension wird unter Druck (1 bis 10 barü) über den Strömgungskanal 17 in das Gehäuse 1 und damit in den ringförmigen Strömungsraum 19 eingeleitet. Die Aufgabesuspension gelangt über den Strömungsraum 33 an den Umfang des Trennscheibenstapels 11.

Die Feinfraktion durchsetzt die Zwischenräume 25 des Trennscheibenstapels 11 und wird über den zentralen Innenraum 28 und den Strömungskanal 27 abgeführt. Die schwereren Massenteilchen der Aufgabesuspension, d. h. die Grobfraktion, werden durch die bei der Rotation des Trennscheibenstapels 11 erzeugte Fliehkraft nach außen bewegt. Dabei verhindert der rotierende Mantelteil 32, daß an der Oberfläche des Trennscheibenstapels 11 unerwünschte Turbulenzen und Wirbel entstehen, die eine Vermischung der nach außen geschleuderten Grobfraktion mit der zugeführten Aufgabesuspension verursachen könnten. Durch die Verwendung des mit dem Trennscheibenstapel 11 rotierenden Mantelteiles 32 wird erreicht, daß sich die Grobfraktion weitgehend an der Innenfläche des Mantelteiles 32 absetzt, durch Fliehkraftwirkung nach außen-oben an die obere Kante des Mantelteiles 32 getragen wird und dann über den ringförmigen Strömungsraum 19 in den Strömungskanal 18 gelangt, aus dem sie über ein einstellbares Drosselventil 34 abgezogen wird.

## Patentansprüche

1. Vorrichtung zum Trennen einer Aufgabesuspension in eine Grobfraktion und eine Feinfraktion, enthaltend
a) einen Stapel von Trennscheiben mit zwischen den Trennscheiben befindlichen freien Zwischenräumen,
b) ein den Trennscheibenstapel aufnehmendes Gehäuse (1) mit einem zwischen dem Umfang des Trennscheibenstapels (11) und der Gehäusewand (3b) befindlichen ringförmigen Strömungsraum (19),
c) eine Antriebseinrichtung, durch die der Trennscheibenstapel (11) um die Stapelachse (15) drehbar ist,
d) einen Strömungskanal (17) zur Zuführung der Aufgabesuspension zum Trennscheibenstapel (11), der an das eine axiale Ende des ringförmigen Strömungsraumes (19) angeschlossen ist,
e) einen an den inneren Umfang der zwischen den Trennscheiben (12) vorgesehenen Zwischenräume (25) angeschlossenen Strömungskanal zur Abführung der Feinfraktion
f) und einen an das andere axiale Ende des ringförmigen Strömungsraumes (19) angeschlossenen Strömungskanal (18) zur Abführung der Grobfraktion,
dadurch gekennzeichnet, daß
g) mit dem Trennscheibenstapel (11) ein Mantelteil (32) drehfest verbunden ist, der einen radialen Abstand vom Umfang des Trennscheibenstapels (11) aufweist,
h) wobei der zwischen dem Mantelteil (32) und dem Umfang des Trennscheibenstapels (11) vorhandene Strömungsraum (33) an dem dem Strömungskanal (17) zur Zuführung der Suspension zugewandten axialen Ende offen und am anderen axialen Ende geschlossen ist.

2. Vorrichtung nach Anspruch 1, dadurch gekennzeichnet, daß der Mantelteil (32) die Form eines Konus aufweist, der sich zu dem dem Strömungskanal (18) zur Abführung der Grobfraktion zugewandten Ende des Trennscheibenstapels (11) verjüngt.

3. Vorrichtung nach Anspruch 1, dadurch gekennzeichnet, daß der mittlere Durchmesser (Dₘ) des Mantelteils (32) das 0,6- bis 0,9fache, vorzugsweise das 0,65-bis 0,85fache des äußeren Durchmessers (Dₐ) des ringförmigen Strömungsraumes (19) beträgt.

## Claims

1. Device for separating a feed suspension into a coarse fraction and a fine fraction, containing
a) a stack of separating discs with free spaces located between the separating discs,
b) a housing (1) which accommodates the stack of separating discs and has an annular flow chamber (19) located between the periphery of the stack of separating discs (11) and the housing wall (3b),
c) a drive arrangement by means of which the stack of separating discs (11) can be rotated about the stack axis (15),
d) a flow channel (17) for delivering the feed suspension to the stack of separating discs (11) which is connected to one axial end of the annular flow chamber (19),
e) a flow channel connected to the inner periphery of the spaces (25) provided between the separating discs (12) for drawing off the fine fraction
f) and a flow channel (18) connected to the other axial end of the annular flow chamber (19) for drawing off the coarse fraction.
characterised in that
g) a casing part (32) which is radially spaced from the periphery of the stack of separating discs (11) is connected to the stack of separating discs (11) so as to be fixed against rotation,
h) the flow chamber (33) between the casing part (32) and the periphery of the stack of separating discs (11) being open at the axial end facing the flow channel (17) for delivery of the suspension and closed at the other axial end.

2. Device as claimed in claim 1, characterised in that the casing part (32) has the shape of a cone which tapers towards the lower end of the stack of separating discs (11) facing the flow channel (18) for drawing off the coarse fraction.

3. Device as claimed in claim 1, characterised in that the mean diameter (Dₘ) of the casing part (32) is advantageously 0.6 to 0.9 times, preferably 0.65 to 0.85 times the external diameter (Dₐ) of the annular flow chamber (19).

## Revendications

1. Dispositif de séparation d'une charge d'une suspension en une fraction grossière et une fraction fine, comprenant :
a) un empilement de disques séparateurs entre lesquels se trouvent des intervalles libres,
b) une enveloppe (1) logeant l'empilement de disques séparateurs et renfermant une chambre annulaire de circulation (19) se trouvant entre la circonférence de l'empilement (11) de disques séparateurs et la paroi de l'enveloppe (3b),
c) un dispositif de commande destiné à entrainer l'empilement (11) de disques séparateurs autour de son axe,
d) un canal de circulation (17) destiné à l'arrivée de la charge de la suspension sur l'empilement (11) de disques séparateurs et raccordé à l'une des extrémités axiales de la chambre annulaire de circulation (19),
e) un canal de circulation destiné à l'évacuation de la fraction fine et raccordé à la circonférence intérieure des intervalles (25) prévus entre les disques séparateurs (12) et
f) et un canal de circulation (18) destiné à l'évacuation de la fraction grossière et raccordé à l'autre extrémité axiale de la chambre annulaire de circulation (19),
caractérisé en ce que
g) un élément d'enveloppe (32) est solidarisé en rotation avec l'empilement (11) de disques séparateurs et il est à distance radiale de la circonférence de cet empilement (11),
h) la chambre de circulation (33) qui est présente entre l'élément d'enveloppe (32) et la circonférence de l'empilement (11) de disques séparateurs est ouverte à l'extrémité axiale tournée vers le canal de circulation (17) destiné à l'arrivée de la suspension et fermée à l'autre extrémité axiale.

2. Dispositif selon la revendication 1, caractérisé en ce que l'élément d'enveloppe (32) a la forme d'un cône qui se rétrécit vers l'extrémité de l'empilement (11) de disques séparateurs qui est tournée vers le canal (18) d'évacuation de la fraction grossière.

3. Dispositif selon la revendication 1, caractérisé en ce que le diamètre moyen (Dₘ) de l'élément d'enveloppe (32) correspond à 0,6 à 0,9 fois, de préférence à 0,65 à 0,85 fois le diamètre extérieur (Dₐ) de la chambre annulaire de circulation (19).
